# EUROPÄISCHE PATENTSCHRIFT

(11) **EP 1 752 339 B1**
(45) Veröffentlichungstag und Bekanntmachung des Hinweises auf die Patenterteilung: **14.09.2011**
(21) Anmeldenummer: 06117281.3
(22) Anmeldetag: 17.07.2006
(51) Int. Cl.: B60R 21/015, B60R 21/013, B60R 22/00

(54) **Verfahren und Vorrichtung zum Ansteuern von zumindest einem Rückhaltemittel, insbesondere reversible Gurtstraffer, eines Kraftfahrzeugs**
Method and device for controlling at least one restraining means, in particular a seat belt pretentioner
Procédé et dispositif pour contrôler au moins un moyen de retenu, et en particulier un prétensionneur de ceinture de sécurité pour véhicule

(30) Priorität: 12.08.2005 DE 102005038226
(43) Veröffentlichungstag der Anmeldung: 14.02.2007
(73) Patentinhaber: ROBERT BOSCH GMBH, 70442 Stuttgart (DE)
(72) Erfinder: Eisele, Sybille, 71711 Murr (DE); Bunse, Michael, 71665 Vaihingen/Enz (DE)

(56) Entgegenhaltungen:
- EP-A- 1 415 872
- GB-A- 2 335 890

## Beschreibung

### STAND DER TECHNIK

Die vorliegende Erfindung betrifft ein Verfahren zum Ansteuern von zumindest einem Rückhaltemittel, insbesondere elektromotorischer Gurtstraffer, eines Kraftfahrzeugs mit einer Steuereinrichtung, und eine entsprechende Vorrichtung dazu.

Derartige Rückhaltemittel, insbesondere reversible Gurtstraffer, für ein Kraftfahrzeug sind aus der Offenlegungsschrift DE 10029061 A1 bekannt, die in Abhängigkeit von fahrdynamischen Zuständen angesteuert werden, anhand derer eine potenzielle Unfallsituation erkannt wird. Durch diese Ansteuerung soll bewirkt werden, dass den Insassen des Kraftfahrzeugs während des Fahrbetriebs eine aktive Sicherheit vermittelt wird.

In der DE 101 21 386 C1 wird ein System beschrieben, bei dem ebenfalls in kritischen Fahrsituationen wie zum Beispiel Übersteuern, Untersteuern oder Notbremsen ein reversibler Gurtstraffer angezogen wird, damit die Insassenbelastung bei einem Unfall möglichst gering ist. Die Ansteuerung erfolgt erst ab einer bestimmten Mindestgeschwindigkeit des Fahrzeugs.

DE 100 05 010 A1 beschreibt ein Verfahren zum Zurückhalten eines Insassen auf einem Fahrzeugsitz, wobei der Insasse bei Erkennen eines kritischen Fahrzeugstandes über einen Gurtstraffer mit einer ersten Kraft in den Sitz gezogen wird und dann in einer zurückgezogenen Position mit einer verringerten Kraft auf dem Sitz gehalten wird.

Diese Systeme haben sich im Allgemeinen bewährt, jedoch ist bei ihnen nicht berücksichtigt, dass ein Anziehen des reversiblen Gurtstraffers in kritischen Fahrsituationen für den Fahrer auch störend wirken kann. Aus Sicht der Produkthaftung muss unbedingt vermieden werden, dass das Anziehen eines Gurtstraffers in einer zwar kritischen Fahrsituation, die jedoch für einen geübten Fahrer gerade noch beherrschbar sein kann, zu einer Fehlreaktion des Fahrers führt, wie beispielsweise ein Verziehen des Lenkrads. Aus diesem Grund sind einige Systeme so ausgelegt, dass der Gurtstraffer nur in solchen Fällen angesteuert wird, bei denen ein Unfall unvermeidlich erwartet wird oder die Situation so eindeutig ist, dass ein Anziehen des reversiblen Gurtstraffers nicht störend für den Fahrer wirkt. Das kann aber dazu führen, dass bei vielen Fahrsituationen, bei denen potenziell eine Gefahr erkannt wird, die aber in diesem Zeitpunkt des Erkennens nicht als gefährlich genug eingestuft wird, der reversible Gurtstraffer nicht angezogen wird. Auf diese Weise wird die Anzahl der kritischen Situationen reduziert, bei denen der reversible Gurtstraffer angezogen wird, obwohl sich die oben beschriebenen weniger gefährlichen Situationen noch zu gefährlicheren Situationen entwickeln können, bei denen dann ein Unfall doch unvermeidlich erwartet wird. Dabei wird wertvolle Zeit zum Anziehen eines reversiblen Gurtstraffers verschenkt, da der vom Gurtstraffer noch nicht angezogene Gurtabschnitt zunächst angezogen werden muss, um dann zur Beseitigung dieser so genannten Gurtlose gestrafft zu werden.

Aus EP 1415 872 A1 ist ein Gurtstraffergerät für Fahrzeuge gemäss dem Oberbegriff des Anspruchs 1 bekannt, bei dem der Gurtstraffer in Abhängigkeit von der Art des Bremsens bzw. einem Signal eines Laser-Radars bzw. einer Eigengeschwindigkeit angesteuert wird. Diese Ansteuerung kann in Stufen oder graduell oder fest vorgenommen werden bzw. entsprechend einer Bremspedalbetätigung.

### VORTEILE DER ERFINDUNG

Die Erfindung hat Vorteile gemäß den unabhangigen Patentansprüchen.

Es ist vorgesehen, dass im Verfahrensschritt (S1) beim Berechnen eines Gefahrenwertes mit einer niedrigeren Gefahrenstufe in Bezug auf einen vorherigen Gefahrenwert mit einer höheren Gefahrenstufe zusätzlich Datenwerte einer Crashsensierung zusammen mit einer vorgebbaren Zeitverzögerung verwendet werden. Damit kann das Ende einer kritischen Fahrsituation und der Beginn des Lösens des Gurtstraffers besser bewertet werden, da zum Beispiel bei Schleuderfahrten Querbeschleunigungen und bei Offroadfahrten Vertikalbeschleunigungen und/oder Rollraten auftreten.

Es ist vorteilhaft, dass im Verfahrensschritt (S3) eine Anzeige für den Fahrer in Abhängigkeit von dem Gefahrenwert erfolgt. Dadurch kann dem Fahrer zusätzlich zu dem Effekt einer Gurtstraffung bei einer gefährlichen Fahrweise dieses auch visualisiert werden, wodurch er sein Fahrverhalten für solche künftigen Situationen vorteilhaft verbessern kann.

Gemäß der Erfindung ist der Verlauf der sich in einer kritischen Fahrsituation ergebenden Ansteuerprofile speicherbar und nachträglich über die Anzeige und/oder eine weitere Schnittstelle der Steuereinrichtung auslesbar. Dieses ist für den Fahrer besonders vorteilhaft, da er nach einer kritischen Situation somit beispielsweise in der Lage ist, diese zu überdenken und sein Fahrverhalten zu verbessern. Weiterhin können dadurch auch Mängel des Fahrzeugs erkannt werden.

Das Verfahren ermöglicht, den reversiblen Gurtstraffer mit einem dafür abgestimmten Kraftverlauf so anzusteuern, dass der Fahrer nicht gestört wird, ohne dass dabei die Anzahl der kritischen Situationen von vornherein auf Situationen eingeschränkt wird, bei denen unvermeidlich ein Unfall erwartet wird.

Dabei ergibt sich, dass mehr potenziell gefährliche Fahrsituationen berücksichtigt werden und die Abdeckungsrate zum optimalen Schutz der Insassen durch Beseitigung von Gurtlose erhöht wird.

Die Voraussagewahrscheinlichkeit eines Crashs steigt an, je näher der Crash zeitlich gesehen bevorsteht. Wenn mit der Ansteuerung des reversiblen Gurtstraffers so lange gewartet wird, bis der Wert der Wahrscheinlichkeit der Crashvorhersage hoch genug ist, kann es für eine Ansteuerung des reversiblen Gurtstraffers schon zu spät sein, da die Aktivierungszeit für einen reversiblen Gurtstraffer ungefähr um den 20fachen Wert höher ist als bei einem pryrotechnischen Gurtstraffer. Bei einem reversiblen Gurtstraffer kann eine Fehlauslösung eher akzeptiert werden als bei einem pyrotechnischen Gurtstraffer, da eine Fehlauslösung bei einem pyrotechnischen Gurtstraffer mit Reparaturkosten verbunden ist.

Ein weiterer Aspekt besteht darin, dass der reversible µGurtstraffer frühzeitig und schnell auf ein gewisses Kraftniveau gebracht wird, welches niedrig genug ist, um auf den Fahrer nicht störend zu wirken. Der effektive Kraftanstieg ist aber groß genug, um dem Antriebsmotor des Gurtstraffers ein solches Schwungmoment zu verleihen, dass bei einer nachfolgenden Ansteuerung die Gurtlose noch beseitigt werden kann.

Ein Verfahren zum Ansteuern von zumindest einem Rückhaltemittel, insbesondere elektromotorischer Gurtstraffer eines Kraftfahrzeugs mit einer Steuereinrichtung weist folgende Verfahrensschritte auf:
(S1) Berechnen eines Gefahrenwertes anhand von Datenwerten einer Sensorik der Fahrsituation oder/und des Umfelds oder/und der Insassen des Kraftfahrzeugs durch eine Berechnungseinrichtung;
(S2) Bilden eines Ansteuerprofils für den Gurtstraffer anhand des Gefahrenwertes durch eine Auswerteeinrichtung; und
(S3) Ansteuern des Gurtstraffers mittels der Steuereinrichtung in Abhängigkeit von dem Ansteuerprofil.

Ein noch weiterer Aspekt ergibt sich nun durch diese besondere Form der Ansteuerung, dass die Ansteuerzeit für die Beseitigung der Gurtlose reduziert wird, falls im Verlauf einer kontinuierlichen Gefahreneinstufung doch noch eine so gefährliche Fahrsituation erkannt wird, bei der eine Beseitigung der Gurtlose in kürzester Zeit gewünscht ist.

Somit kann bereits bei einem relativ niedrigen Gefahrenwert der Gurtstraffer mit einem bestimmten Ansteuerprofil angesteuert werden, ohne dass der Fahrer gestört wird, wobei die Anzahl von potenziell gefährlichen Fahrsituationen nicht eingeschränkt wird.

Dabei ist es vorgesehen, dass das Ansteuerprofil den zeitlichen Verlauf der Kraft des elektromotorischen Gurtstraffers vorgibt, wobei es einen ersten Zeitabschnitt zum Aktivieren auf eine bestimmte Kraft und einen zweiten Zeitabschnitt zum Beibehalten der bestimmten Kraft des Gurtstraffers auf weist.

In bevorzugter Ausgestaltung ist vorgesehen, dass im Verfahrensschritt (S2) der Gefahrenwert mit vorgebbaren Schwellwerten, die jeweils zu einer bestimmten Gefahrenstufe korrespondieren, verglichen wird und das Bilden des jeweiligen Ansteuerprofils aus vorgebbaren gespeicherten Datenwerten anhand des Vergleichens erfolgt.

In weiterer bevorzugter Ausgestaltung wird im Verfahrensschritt (S2) bei Änderung des Gefahrenwertes auf eine höhere Gefahrenstufe das vorherige Ansteuerprofil durch das zu dem neuen Gefahrenwert korrespondierende Ansteuerprofil unmittelbar ersetzt, und wird bei Änderung des Gefahrenwertes auf eine niedrigere Gefahrenstufe das vorherige Ansteuerprofil durch das zu dem neuen Gefahrenwert korrespondierende Ansteuerprofil nach Ablauf einer vorgebbaren Zeit ersetzt. Damit wird einerseits erreicht, dass bei einer neuen gefährlicheren Fahrsituation ein sofortiges Anspannen des Gurtstraffers erfolgt. Andererseits ist eine ständige Ansteuerung des Antriebsmotors des Gurtstraffers auf einem bestimmten Kraftniveau, das den Fahrer nicht stört, auf Grund von möglicher Überhitzung des Antriebsmotors nicht möglich. Daher wird bei einem sich abschwächenden Gefahrenwert nach einem Zeitverzug das Kraftniveau des Antriebsmotors auf einen für diesen entsprechend niedrigen Wert zurückgestellt. Dazu ist es vorteilhaft, dass diese vorgebbare Zeit im Verfahrensschritt (S1) berechnet wird. Dadurch ergibt sich weiterhin der Vorteil, dass in ungefährlicheren Situationen mehr Gurtlose zugelassen werden, wodurch ein erhöhter Komfort erreicht wird.

In einer bevorzugten Ausführungsform der Erfindung werden im Verfahrensschritt (S3)Ansteuersignale für das Ansteuern des elektromotorischen Gurtstraffers durch Veränderung seines Motorstroms in Abhängigkeit von dem jeweiligen Ansteuerprofil gebildet. Dadurch kann der elektromotorische Gurtstraffer korrespondierend zum Ansteuerprofil mittels des Motorstroms in einfacher Weise gesteuert werden.

Erfindungsgemäß ist es vorgesehen, dass die Vorrichtung eine Anzeigeeinrichtung zur Anzeige eines Hinweises für den Fahrer in Abhängigkeit von dem Gefahrenwert aufweist. Damit kann die aktuelle Gefahrensituation noch zur Verstärkung visualisiert werden.

Eine Vorrichtung zur Ansteuerung von zumindest einem reversiblen Rückhaltemittel, insbesondere elektromotorischer Gurtstraffer, eines Kraftfahrzeugs mit einer Steuereinrichtung, weist Folgendes auf:
- eine Berechnungsvorrichtung zur Berechnung eines Gefahrenwertes anhand von Datenwerten einer Sensorik der Fahrsituation, des Umfelds und der Insassen des Kraftfahrzeugs;
- eine Auswerteeinrichtung zur Bildung eines Ansteuerprofils für den Gurtstraffer anhand des Gefahrenwertes;
- eine Übergabeeinrichtung zur Übergabe des Ansteuerprofils an die Steuereinrichtung zur Ansteuerung des Gurtstraffers in Abhängigkeit von dem Ansteuerprofil; und eine Speichereinrichtung zur Speicherung von vorgebbaren Datenwerten.

In einer bevorzugten Ausführüngsform der erfindungsgemäßen Vorrichtung weist die Übergabeeinrichtung eine Erzeugungseinrichtung zur Bildung von Ansteuersignalen für die Ansteuerung des elektromotorischen Gurtstraffers durch Veränderung seines Motorstroms in Abhängigkeit von dem jeweiliden Ansteuerprofil auf. Damit ist es leicht, die Ansteuerprofile in Form von einfachen Datenwerten zu erstellen, die dann über geeignete Steuerelemente den Motor und somit das Kraftniveau des Gurtstraffers effektiv beeinflussen.

Die Vorrichtung ist in bevorzugter Ausführung ein Bestandteil der Steuereinrichtung. Dadurch werden Bauteile eingespart, wodurch die Einbringung der Erfindung in vorhandene Systeme wirtschaftlich ist.

Weitere Vorteile, Einzelheiten und Merkmale der Erfindung sind dem sich anschließenden Beschreibungsteil und den Zeichnungen zu entnehmen.

### ZEICHNUNGEN

Die Erfindung wird nachfolgend anhand der in den Figuren der Zeichnung angegebenen Ausführungsbeispiele näher erläutert.

Es zeigt dabei:
- FIG. 1: eine Blockdarstellung eines Ausführungsbeispiels einer erfindungsgemäßen Vorrichtung;
- FIG. 2: zwei beispielhafte Ansteuerprofile;
- FIG. 3: zwei weitere beispielhafte Ansteuerprofile;
- FIG. 4: eine beispielhafte Darstellung von aufeinander folgenden Ansteuerprofilen; und
- FIG. 5: ein Flussdiagramm eines Ausführungsbeispiels eines erfindungsgemäßen Verfahrens.

### BESCHREIBUNG DES AUSFÜHRUNGSBEISPIELS

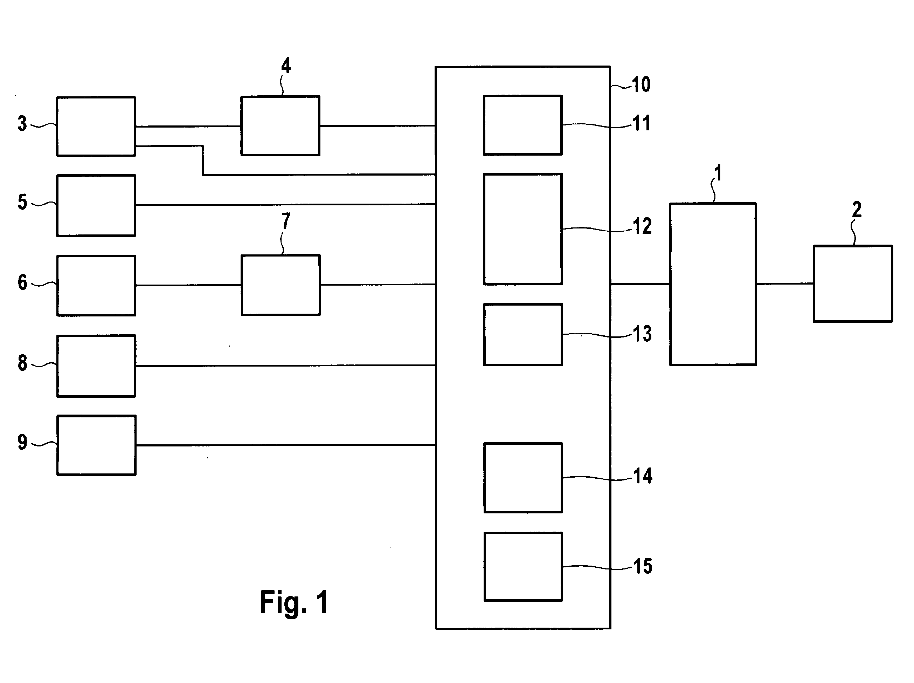

Eine Blockdarstellung eines Ausführungsbeispiels einer erfindungsgemäßen Vorrichtung 10 zur Ansteuerung von zumindest einem reversiblen Rückhaltemittel, einem elektromotorischen Gurtstraffer 2, eines nicht gezeigten Kraftfahrzeugs mit einer Steuereinrichtung 1 ist in Fig. 1 gezeigt.

Die Vorrichtung 10 steht mit zahlreichen Sensoreinrichtungen 3 bis 9 in Verbindung, die ihr Informationen in Form von Datenwerten in bekannter Weise über Fahrsituation oder/und Umfeld oder/und Insassen des Kraftfahrzeugs liefern. Solche Fahrsituationen können mit Sensorsignalen, die üblicherweise einem ESP-Steuergerät eines Kraftfahrzeugs zur Verfügung stehen, erkannt werden.

Hierbei ist es zum Beispiel eine Sensorik Fahrdynamik 3, die Datenwerte der Querbeschleunigung, des Lenkwinkels, der Raddrehzahlen, des Gierwinkels etc an die Vorrichtung 10 liefert. Diese Datenwerte können auch in bearbeiteter Form als abgeleitete Werte der Fahrdynamik 4, wie zum Beispiel Querbeschleunigungsänderung, Lenkwinkeländerung, Schwimmwinkel, Fahrzeuggeschwindigkeit, Gierrate etc. geliefert werden.

Eine Bremssensorik 5 erkennt das Bremsverhalten und gibt bei einer Notbremsung bestimmte Signale an die Vorrichtung 10. Die Bremssensorik 5 sensiert dazu Bremsdruck, Bremsdruckgradient, Bremspedalweg, Zeitspann zwischen Wechsel Gaspedal und Bremspedal, denn eine Notbremsung stellt eine kritische Fahrsituation dar, bzw. ist zum Erkennen von kritischen Fahrsituationen wichtig.

Eine Umfeldsensorik 6, wie zum Beispiel Radar, Lidar, Ultraschall, Infrarot, kann genutzt werden, um potenziell gefährliche Objekte mit deren voraussichtlichem Auftreffzeitpunkt, Aufprallpunkt und - winkel und der relativen Aufprallgeschwindigkeit zu erfassen, wozu eine Crashobjektberechnung 7 Datenwerte an die Vorrichtung 10 liefert.

Darüber hinaus kann eine Insassensensorik 8 Informationen über den Status von Fahrzeuginsassen geben. Zu diesem Status gehören die Insassenposition, sowie eine Insassenklassifikation. Die Positionsermittlung erfolgt zum Beispiel mittels Radar, Lidar, Ultraschall, Infrarot, Videobild, Sitzposition, Gurtauszugslänge etc. Die Klassifizierung wird durch Gewichtssensierung, Gurtschlosszustand, Einstellung von Gurthöhe an der B-Säule etc. ermittelt.

Eine Crashsensierung 9 kann zusammen mit einer Zeitmessung zur Bewertung beitragen, wann eine kritische Fahrsituation beendet ist. Bei Schleuderfahrten treten Querbeschleunigungen und bei Gelände- bzw. Offroadfahrten Vertikalbeschleunigungen und/oder Rollraten auf, die eine Straffung der Gurte erfordern.

Die Vorrichtung 10 erhält die von der Sensorik 3 bis 9 gelieferten Datenwerte und bearbeitet diese zunächst in einer Berechnungseinrichtung 11. Dabei können entweder alle, einige oder nur ein Datenwert verwendet werden. Aus den erfassten Informationen berechnet die Berechnungseinrichtung 11 einen so genannter Gefahrenwert. Dieser Gefahrenwert wird in einer Auswerteeinrichtung 12 mit vorgebbaren Schwellwerten verglichen, die bestimmten Gefahrenstufen entsprechen.

Die vorgebbaren Schwellwerte sind vorzugsweise in einer Speichereinrichtung 14 als Datenwerte gespeichert, zum Beispiel in einer Tabellenform. In der Speichereinrichtung 14 sind weiterhin Datenwerte gespeichert, die Ansteuerprofilen AP1 bis AP5 entsprechen, welche anhand der Vergleichsergebnisse mit diesen Datenwerten gebildet werden. Der Aufbau der Ansteuerprofile AP1 bis AP5 wird weiter unten noch ausführlicher erläutert. Die Anzahl der Ansteuerprofile AP ist nicht beschränkt.

Eine Anzeigeeinrichtung 15 der Vorrichtung 10 dient optional zur Information des Fahrers über die jeweilige Gefahreneinstufung der Fahrsituation und/oder zur Warnung. Sie kann sowohl visuell als auch akustisch ausgebildet sein.

Ein Ansteuerprofil AP 1 bis AP5 gibt einen bestimmten Kraftverlauf für den Gurtstraffer 2 vor. Dazu wird das jeweilige Ansteuerprofil AP1 bis AP5 mittels einer Übergabeeinrichtung 13 so angepasst, dass die mit der Vorrichtung 10 verbundene Steuereinrichtung 1 des Gurtstraffers 2 aus diesen ihr zugeleiteten angepassten Datenwerten eine solche geeignete Ansteuerung des elektromotorischen Gurtstraffers vornimmt, dass dessen Kraftverlauf der Vorgabe des jeweiligen Ansteuerprofils AP1 bis AP5 entspricht. Dieses erfolgt beispielsweise, indem Leistungshalbleiter in Abhängigkeit von den Datenwerten des jeweiligen Ansteuerprofils AP1 bis AP5 den Strom I des Motors des Gurtstraffers 2 so beeinflussen, dass der Motor das entsprechende Kraftniveau erzeugt.

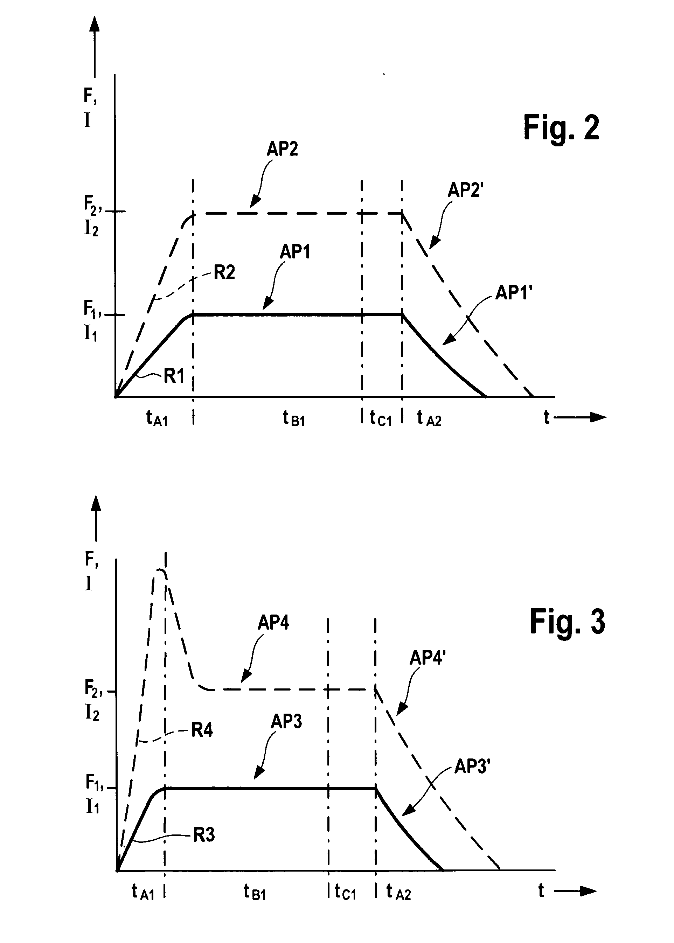

In Fig. 2 und 3 sind derartige Ansteuerprofile AP1 bis AP4 beispielhaft dargestellt. Sie bilden den Verlauf von Kraft F bzw. Strom I des Motors des Gurtstraffers 2 über der Zeit t.

Fig. 2 zeigt zwei Ansteuerprofile AP1 und AP2, die jeweils zwei Zeitabschnitte tA1 und tB1 aufweisen. In dem ersten Zeitabschnitt tA1 steigt die Kraft F bzw. der Strom I in Form einer Rampe R1, R2 bis auf einen Kraft- bzw. Stromwert F1, I1 bzw. F2, I2 an, der im zweiten Zeitabschnitt tB2 konstant bleibt. Der erste Zeitabschnitt tA1 bildet das Anspannen des Gurtstraffers 2, der zweite Zeitabschnitt tB2 das Halten des Gurtstraffers 2 auf einer bestimmten Kraft. Das Ansteuerprofil AP1 weist eine kleinere Amplitude als das Ansteuerprofil AP2 auf, und ist somit einem niedrigeren Gefahrenwert zugeordnet. Weiterhin sind die Rampen R1, R2 unterschiedlich, können aber auch eine andere Form aufweisen.

Wenn die Gefahrensituation beendet ist, wird der kontinuierlich berechnete Gefahrenwert eine niedrigere Gefahrenstufe bilden, die einem neuen Ansteuerprofil AP1', AP2' entspricht. Bevor das neue Ansteuerprofil AP1', AP2' verwendet wird, wird ein Zeitabschnitt tC1 eingefügt, der einer vorgebbaren Verzögerung entspricht. Dann setzt der neue erste Zeitabschnitt tA2 ein. Das neue Ansteuerprofil AP1', AP2' hat den Kraftwert 0, sodass eine abfallende Flanke erzeugt wird, die ebenfalls unterschiedliche Formen aufweisen kann. Hier ist eine abfallende Rampe gezeigt.

Bei einem Gefahrenwert, dem die höchste Gefahrenstufe zugeordnet ist, ist ein schnelles Erreichen des höchsten Kraftniveaus erforderlich. Dazu kann der Elektromotor des Gurtstraffers 2 mit der größten Stromstärke angesteuert werden. Dieses ist beispielhaft in Fig. 3 mit Rampe R4 als eine Stromspitze des Ansteuerprofils AP4 dargestellt. Das Ansteuerprofil AP3 entspricht einem niedrigeren Gefahrenwert und dient hier zum Vergleich.

Weiterhin zeigen die Fig. 2 und 3 in einer zweiten Interpretation beispielhaft den Zusammenhang von Stromstärke I des Gurtstraffers 2 und der von diesem dadurch erzeugten Kraft. Die Ansteuerprofile AP2 und AP4 sind gestrichelt gezeichnet, und stellen im Zusammenhang mit den jeweils darunter in durchgehender Kurve gezeichneten Ansteuerprofilen AP 1 und AP3 (Kraftverlauf F) die Stromstärke I dar. Somit lässt sich in Fig. 2 erkennen, dass bei einer auf den Gurtstraffer 2 aufgebrachten Stromstärke I mit dem Ansteuerprofil AP2 mit der Rampe R2 ein Kraftverlauf F mit dem Ansteuerprofil AP 1 und der Rampe R1 erzeugt wird.

In der Fig. 3 wird mit der größtmöglichen Stromstärke I mit der Rampe R4 im Ansteuerprofil AP4 ein Kraftverlauf F mit dem Ansteuerprofil AP3 mit der auf diese Weise steilsten Rampe R3 erzeugt.

Derartige Zuordnungen von Ansteuerprofilen AP2 zu AP2 und AP4 zu AP3 sind nur an diesen zwei Beispielen dargestellt. Es können mehr Zuordnungen möglich sein, die in geeigneter Weise gespeichert und gemäß der aktuellen Gefahrensituation abrufbar sind.

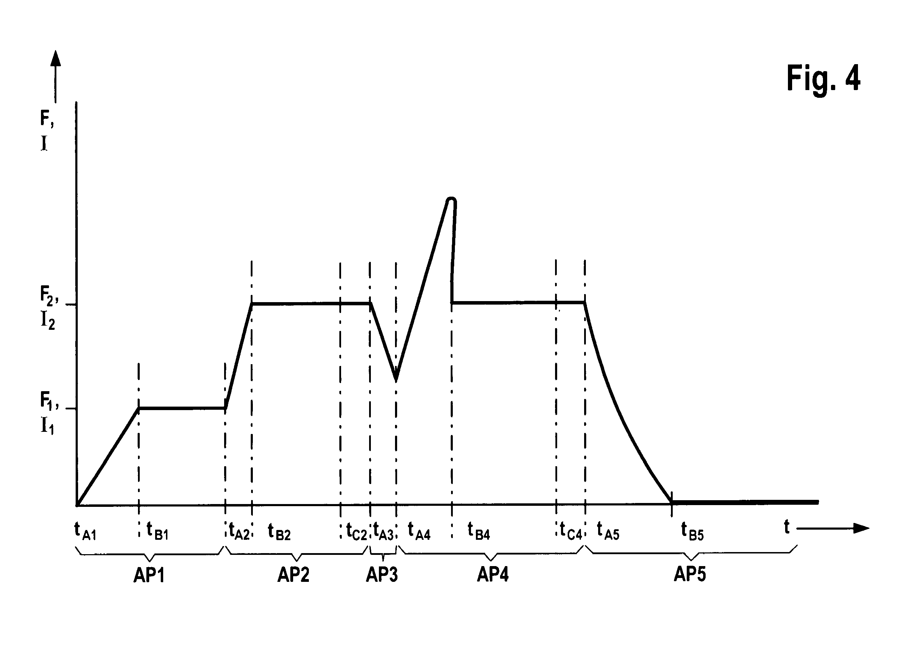

Die Fig. 4 ist eine beispielhafte Darstellung von aufeinander folgenden Ansteuerprofilen AP1 bis AP5. Es soll hiermit eine Folge von verschiedenen Gefahrenwerten mit entsprechenden Ansteuerprofilen AP1 bis AP5 erläutert werden.

Während des Betriebes des zugehörigen Kraftfahrzeugs wird durch die Vorrichtung 10 ein Gefahrenwert berechnet, der anhand laufend neuer erfasster Daten der Sensoreinrichtungen 3 bis 9 von der Berechnungseinrichtung 11 aktualisiert wird. Dem ersten Gefahrenwert wird auf Grund seiner Gefahrenstufe ein erstes Ansteuerprofil AP1 mit einem ersten und zweiten Zeitabschnitt tA1, tB1 und mit einem ersten Kraftwert F1 zugeordnet. Der Gefahrenwert ändert sich nun auf eine höhere Gefahrenstufe, wobei ihm ein zweites Ansteuerprofil AP2 mit einem ersten und zweiten Zeitabschnitt tA2, tB2 und mit einem zweiten Kraftwert F2 zugeordnet wird. Der Gefahrenwert ändert sich dann auf eine niedrigere Gefahrenstufe, wobei ein Zeitabschnitt tC2 einer Zeitverzögerung hinzugefügt wird, bevor das dem nun aktuellen niedrigeren Gefahrenwert zugeordnete Ansteuerprofil AP3 mit einem ersten Zeitabschnitt tA3 und einem Kraftwert kleiner als F2 verwendet wird. Bevor dieser erste Zeitabschnitt tA3 abgelaufen ist, ändert sich der Gefahrenwert auf die höchste Gefahrenstufe, was einen sofortigen Kraftanstieg im ersten Zeitabschnitt tA4 eines folgenden Ansteuerprofils AP4 auslöst. Dann bleibt der Kraftwert F2 im zweiten Zeitabschnitt tB4 des Ansteuerprofils AP4 bestehen, bis sich der Gefahrenwert auf die niedrigste Gefahrenstufe ändert. Daher folgt ein Verzögerungs-Zeitabschnitt tC4, bevor das Ansteuerprofil AP5 für den niedrigsten Gefahrenwert mit einem ersten Zeitabschnitt tA5 auf den Kraftwert 0 in einem zweiten Zeitabschnitt tB5 absinkt.

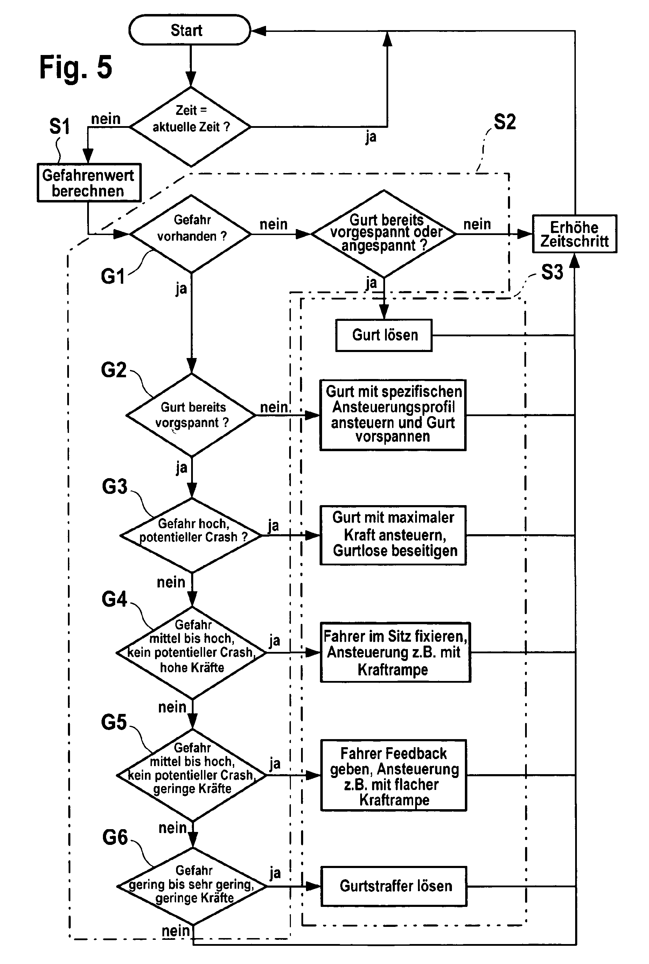

Die Berechnung des Gefahrenwerts erfolgt kontinuierlich, was mittels des erfindungsgemäßen Verfahrens erfolgt. Ein Ausführungsbeispiel wird nun anhand eines Flussdiagramms in Fig. 5 beschrieben.

Im dargestellten Beispiel wird vor dem ersten Verfahrensschritt S1 ein Zeitzähler gesetzt und dann im Verfahrensschritt S1 der Gefahrenwert anhand der oben beschriebenen Sensorik 3 bis 9 berechnet. Im darauf folgenden Verfahrensschritt S2 wird zunächst der berechnete Gefahrenwert mit einem vorgebbaren Schwellwert für eine erste Gefahrenstufe G1 verglichen. Ist dieser Schwellwert nicht überschritten, so wird der Gefahrenwert nicht als solcher eingestuft. Ein bereits vorgespannter Gurtstraffer wird wieder gelöst, es kann für mehr Komfort mehr Gurtlose zugelassen werden. Der Zeitzähler wird um erhöht und es wird wieder der aktuelle Gefahrenwert im Verfahrensschritt S 1 berechnet.

Wird die Gefahrenstufe G1 jedoch durch Überschreiten des Schwellwerts erreicht, so wird der berechnete Gefahrenwert über verschiedene Vergleiche mit entsprechend unterschiedlichen Schwellwerten verglichen, um eine korrespondierende Gefahrenstufe G2 bis G5 zu erhalten. Gemäß dem dann erreichten Schwellwert wird im Verfahrensschritt S3 dem Gefahrenwert ein entsprechendes Ansteuerprofil AP zugeordnet, mit dem der Gurtstraffer 2 wie oben beschrieben angesteuert wird.

In diesem Beispiel werden weitere Gefahrenstufen G2 bis G5 unterschieden: Ist der Gefahrenwert auf die Gefahrenstufe G2, die die höchste Einstufung bildet, angestiegen, droht potenziell ein Crash. Die Gurtlose muss in diesem Fall umgehend beseitigt werden, der Motor des reversiblen Gurtstraffers 2 wird mit maximal möglicher Stromstärke angesteuert.
Bei einer Gefahrenstufe G3 droht kein potenzieller Crash, doch sind die auf den Insassen wirkende Kräfte so hoch, dass daraus für diesen Bewegungen resultieren würden, wenn der Insasse nicht fixiert würde. In diesem Fall wird die Gurtkraft mit einer steilen Rampe R2 (siehe Fig. 2) schnell aufgebaut. In der Gefahrenstufe G4 ist die Gefahr mittel bis hoch eingestuft, es wirken geringere Kräfte als in der Gefahrenstufe G3. Der (fahrerseitige) reversible Gurtstraffer 2 wird so angesteuert, dass sich die Gurtkraft allmählich aufbaut (Rampe R1 in Fig. 2), um dem Fahrer ein Feed-Back zu geben, dass er sich in einer gefährlichen Situation befindet und seine Fahrweise entsprechend verändern muss.
In der Gefahrenstufe G5 ist die Gefahr gering bis sehr gering, es treten nur geringe Kräfte auf, so dass der Gurtstraffer, wenn er vorgespannt war, wieder für mehr Komfort gelöst wird.

Die oben beschriebene Gefahreneinstufung ist nur ein Beispiel, andere Einstufungen sind selbstverständlich möglich.

Somit wird der Gurtstraffer bei einem relativ niedrigen Gefahrenwert mit einem bestimmten Ansteuerprofil angesteuert, ohne dass der Fahrer gestört wird, wobei die Anzahl von potenziell gefährlichen Fahrsituationen nicht eingeschränkt wird.

Die Erfindung ist nicht auf die oben erläuterten Ausführungsbeispiele beschränkt, sondern auf vielfältige Art und Weise modifizierbar.

Es ist denkbar, dass ein Ansteuerprofil AP1 bis AP5 ein anderes Profil aufweist, dass beispielsweise anstelle von Geraden bestimmte Kurvenverläufe verwendet werden. Die Zeitabschnitte tA1..., tB1... können auch in mehrere Abschnitte mit verschiedenen Verläufen unterteilt werden, um eine besonders optimale Anpassung zu erreichen.

Es ist denkbar, dass die berechneten Gefahrenwerte und zugeordneten Ansteuerprofile in ihrem zeitlichen Verlauf gespeichert werden, um nachträglich vom Fahrer über die Anzeigeeinrichtung 15 aufgerufen zu werden, damit dieser die kritischen Situationen zurück verfolgen kann. Damit lässt sich auch feststellen, ob das Fahrzeug in einer eigentlich unkritischen Situation beispielsweise auf Grund von Bauteilmängeln kritisch reagiert hat.

## Patentansprüche

1. Verfahren zum Ansteuern von zumindest einem Rückhaltemittel, insbesondere elektromotorischer Gurtstraffer (2), eine Kraftfahrzeugs mit einer Steuereinrichtung (1), welches folgende Verfahrensschritte aufweist:
(S1) Berechnen eines Gefahrenwertes anhand von Datenwerten einer Sensorik (3...8) der Fahrsituation oder/und des Umfelds oder/und der Insassen des Kraftfahrzeugs durch eine Berechnungseinrichtung (11);
(S2) Bilden eines Ansteuerprofils (AP1 ... n) für den Gurtstraffer (2) anhand des Gefahrenwertes durch eine Auswerteeinrichtung (12); und
(S3) Ansteuern des Gurtstraffers (2) mittels der Steuereinrichtung (1) in Abhängigkeit von dem Ansteuerprofil (AP1...n),
**dadurch gekennzeichnet,**
**dass** im Verfahrensschritt (S1) beim Berechnen eines Gefahrenwertes mit einer niedrigeren Gefahrenstufe in Bezug auf einen vorherigen Gefahrenwert mit einer höheren Gefahrenstufe zusätzlich Datenwerte einer Crashsensierung (9) zusammen mit einer vorgebbaren Zeitverzögerung verwendet werden, dass im Verfahrensschritt (S3) eine Anzeige für den Fahrer in Abhängigkeit von dem Gefahrenwert erfolgt, dass der Verlauf der sich in einer kritischen Fahrsituation ergebenden Ansteuerprofile gespeichert und nachträglich über die Anzeige und/oder eine weitere Schnittstelle der Steuereinrichtung (1) ausgelesen wird.

2. Verfahren nach Anspruch 1,
**dadurch gekennzeichnet,**
**dass** das Ansteuerprofil (AP1...n) den zeitlichen Verlauf der Kraft (F) des elektromotorischen Gurtstraffers (2) vorgibt.

3. Verfahren nach Anspruch 2,
**dadurch gekennzeichnet,**
**dass** das Ansteuerprofil (AP1...n) einen ersten Zeitabschnitt (tA1...n) zum Aktivieren auf eine bestimmte Kraft (F1, F2) und einen zweiten Zeitabschnitt (tA1...n) zum Beibehalten der bestimmten Kraft (F1, F2) des Gurtstraffers (2) aufweist.

4. Verfahren nach einem der Ansprüche 1 bis 3,
**dadurch gekennzeichnet,**
**dass** im Verfahrensschritt (S2) der Gefahrenwert mit vorgebbaren Schwellwerten, die jeweils zu einer bestimmten Gefahrenstufe (G1...n) korrespondieren, verglichen wird und das Bilden des jeweiligen Ansteuerprofils (AP1...n) aus vorgebbaren gespeicherten Datenwerten anhand des Vergleichens erfolgt.

5. Verfahren nach Anspruch 4,
**dadurch gekennzeichnet,**
**dass** im Verfahrensschritt (S2) bei Änderung des Gefahrenwertes auf eine höhere Gefahrenstufe das vorherige Ansteuerprofil (AP1...n) durch das zu dem neuen Gefahrenwert korrespondierende Ansteuerprofil (AP1...n) unmittelbar ersetzt wird, und dass bei Änderung des Gefahrenwertes auf eine niedrigere Gefahrenstufe das vorherige Ansteuerprofil (AP1...n) durch das zu dem neuen Gefahrenwert korrespondierende Ansteuerprofil (AP1...n) nach Ablauf einer vorgebbaren Zeit ersetzt wird.

6. Verfahren nach Anspruch 5,
**dadurch gekennzeichnet,**
**dass** die vorgebbare Zeit im Verfahrensschritt (S1) berechnet wird.

7. Verfahren nach einem der Ansprüche 1 bis 6,
**dadurch gekennzeichnet,**
**dass** im Verfahrensschritt (S3) Ansteuersignale für das Ansteuern des elektromotorischen Gurtstraffers (2) durch Veränderung seines Motorstroms (I) in Abhängigkeit von dem jeweiligen Ansteuerprofil (AP1...n) gebildet werden.

8. Vorrichtung (10) zur Ansteuerung von zumindest einem reversiblen Rückhaltemittel, insbesondere elektromotorischer Gurtstraffer (2), eines Kraftfahrzeugs mit einer Steuereinrichtung (1), wobei die Vorrichtung (10) Folgendes aufweist:
- eine Berechnungsvorrichtung (11) zur Berechnung eines Gefährenwertes anhand von Datenwerten einer Sensorik (3...9) der Fahrsituation, des Umfelds und der insassen des Kraftfahrzeugs;
- eine Auswerteeinrichtung (12) zur Bildung eines Ansteuerprofils (AP1...n) für den Gurtstraffer (2) anhand des Gefahrenwertes;
- eine Übergabeeinrichtung (13) zur Übergabe des Ansteuerprofils (AP1...n) an die Steuereinrichtung (1) zur Ansteurung des Gurtstraffers(2) in Abhängigkeit von dem Ansteuerprofil (AP...1.n); und eine Speichereinrichtung (14) zur Speicherung von vorgebbaren Datenwerten,
**dadurch gekennzeichnet, dass** die Vorrichtung (10) eine Anzeigeeinrichtung (15) zur Anzeige eines Hinweises für den Fahrer in Abhängigkeit von dem Gefahrenwert aufweist, dass der Verlauf der sich in einer kritischen Fahrsituation ergebenden Ansteuerprofile gespeichert und nachträglich über die Anzeige und/oder eine weitere Schnittstelle der Steuereinrichtung (1) ausgelesen wird, dass beim Berechnen eines Gefahrenwertes mit einer niedrigeren Gefahrenstufe in Bezug auf einen vorherigen Gefahrenwert mit einer höheren Gefahrenstufe zusätzlich Datenwerte werden und dass eine Anzeige für den Fahrer in Abhängigkeit von dem Gefahrenwert erfolgt.

9. Vorrichtung nach Anspruch 8,
**dadurch gekennzeichnet,**
**dass** die Übergabeeinrichtung (13) eine Erzeugungseinrichtung zur Bildung von Ansteuersignalen für die Ansteuerung des elektromotorischen Gurtstraffers (2) durch Veränderung seines Motorstroms (I) in Abhängigkeit von dem jeweiligen Ansteuerprofil (AP1...n) aufweist.

10. Vorrichtung (10) nach einem der Ansprüche 8 bis 9,
**dadurch gekennzeichnet,**
**dass** die Vorrichtung (10) ein Bestandteil der Steuereinrichtung (1) ist.

## Claims

1. Method for actuating at least one restraining means, in particular an electric-motor-operated seat belt pretensioner (2), of a motor vehicle having a control apparatus (1) which has the following method steps:
(S1) calculation of a hazard value on the basis of data values of a sensor system (3...8) of the driving situation and/or of the surroundings and/or of the occupants of the vehicle by means of a calculation device (11);
(S2) formation of an actuation profile (AP1...n) for the seat belt pretensioner (2) on the basis of the hazard value by means of an evaluation device (12); and
(S3) actuation of the seat belt pretensioner (2) by means of the control apparatus (1) as a function of the actuation profile (AP1...n),
**characterized**
**in that**, when a hazard value with a relatively low hazard level compared to a previous hazard value with a relatively high hazard level is calculated in method step (S1), data values of a crash sensing means (9) are additionally used together with a predefinable time delay, in that in the method step (S3) a display is provided for the driver as a function of the hazard value, in that the variation of the actuation profiles which result in a critical driving situation are stored and subsequently output via the display and/or via a further interface of the control apparatus (1).

2. Method according to Claim 1,
**characterized**
**in that** the actuation profile (AP1...n) predefines the variation of the force (F) of the electric-motor-operated seat belt pretensioner (2) over time.

3. Method according to Claim 2,
**characterized**
**in that** the actuation profile (AP1... n) has a first time segment (tA1...n) for activating up to a specific force (F1, F2) and a second time segment (tA1...n) for maintaining the specific force (F1, F2) of the seat belt pretensioner (2).

4. Method according to one of Claims 1 to 3,
**characterized**
**in that** in the method step (S2) the hazard value is compared with predefinable threshold values which respectively correspond to a specific hazard level (G1...n), and the respective actuation profile (AP1...n) is formed from predefinable stored data values on the basis of the comparison.

5. Method according to Claim 4,
**characterized**
**in that** when the hazard value changes to a higher hazard level in the method step (S2), the previous actuation profile (AP1...n) is immediately replaced by the actuation profile (AP1...n) which corresponds to the new hazard value, and in that when the hazard value changes to a lower hazard level the previous actuation profile (AP1...n) is replaced by the actuation profile (AP1...n) corresponding to the new hazard value, after a predefinable time has expired.

6. Method according to Claim 5,
**characterized**
**in that** the predefinable time is calculated in the method step (S1).

7. Method according to one of Claims 1 to 6,
**characterized**
**in that** in the method step (S3) actuation signals for actuating the electric-motor-operated seat belt pretensioner (2) are formed by changing the motor current (I) thereof as a function of the respective actuation profile (AP1...n).

8. Device (10) for actuating at least one reversible restraining means, in particular electric-motor-operated seat belt pretensioner (2), of a motor vehicle having a control apparatus (1), wherein the device (10) has the following:
- a calculation device (11) for calculating a hazard value on the basis of data values of a sensor system (3...9) of the driving situation, of the surroundings and of the occupants of the motor vehicle;
- an evaluation device (12) for forming an actuation profile (AP1...n) for the seat belt pretensioner (2) on the basis of the hazard value;
- a transfer device (13) for transferring the actuation profile (AP1...n) to the control apparatus (1) for actuating the seat belt pretensioner (2) as a function of the actuation profile (AP1...n); and
a memory device (14) for storing predefinable data values,
**characterized in that** the device (10) has a display device (15) for displaying an indication for the driver as a function of the hazard value, **in that** the variation of the actuation profiles which occur in a critical driving situation are stored and subsequently output via the display and/or via a further interface of the control apparatus (1), **in that**, when a hazard value with a relatively low hazard level compared to a previous hazard value with a relatively high hazard level is calculated, data values of a crash sensing means are additionally used together with a predefinable time delay, and **in that** a display is provided for the driver as a function of the hazard value.

9. Device according to Claim 8,
**characterized**
**in that** the transfer device (13) has a generating device for forming actuation signals for actuating the electric-motor-operated seat belt pretensioner (2) by changing its motor current (I) as a function of the respective actuation profile (AP1...n).

10. Device (10) according to one of Claims 8 to 9,
**characterized**
**in that** the device (10) is a component of the control apparatus (1).

## Revendications

1. Procédé de commande d'au moins un moyen de retenue, en particulier d'un tendeur (2) de ceinture à moteur électrique d'un véhicule automobile, à l'aide d'un dispositif de commande (1), le procédé comportant les étapes suivantes :
(S1) calcul par un dispositif de calcul (11) d'un indice de danger à l'aide de valeurs de données d'un ensemble de détecteurs (3...8) de la situation de conduite, de l'environnement et/ou des passagers du véhicule automobile,
(S2) à l'aide de l'indice de danger, formation par une unité d'évaluation (12) d'un profil de commande (AP1...n) du tendeur (2) de ceinture et
(S3) commande du tendeur (2) de ceinture au moyen du dispositif de commande (1) en fonction du profil de commande (AP1...n),
**caractérisé en ce que**
à l'étape (S1) du traitement, lors du calcul d'un indice de danger qui présente un bas niveau de danger par rapport à un indice de danger précédent à haut niveau de danger, on utilise en supplément des valeurs de données d'une détection de collision (9) en même temps qu'un retard temporel prédéterminé,
**en ce qu'**à l'étape (S3) du procédé, un affichage est effectué à destination du conducteur en fonction de l'indice de danger et
**en ce que** l'évaluation des profils de commande qui correspondent à une situation de conduite critique est conservée en mémoire et est lue ultérieurement par l'intermédiaire de l'affichage et/ou d'une autre interface du dispositif de commande (1).

2. Procédé selon la revendication 1, **caractérisé en ce que** le profil de commande (AP1...n) définit l'évolution temporelle de la force (F) du tendeur (2) de ceinture à moteur électrique.

3. Procédé selon la revendication 2, **caractérisé en ce que** le profil de commande (AP1...n) présente un premier intervalle de temps (tA1...n) qui active le tendeur (2) de ceinture par une force (F1, F2) définie et un deuxième intervalle de temps (tA1...n) qui maintient la force définie (F1, F2) sur le tendeur de ceinture.

4. Procédé selon l'une des revendications 1 à 3, **caractérisé en ce qu'**à l'étape (S2) du procédé, l'indice de danger est comparé à des valeurs de seuil prédéterminées qui correspondent chacune à un niveau défini de danger (G1...n) et **en ce que** la formation du profil de commande (AP1...n) s'effectue à l'aide de la comparaison de valeurs de données prédéterminées et conservées en mémoire.

5. Procédé selon la revendication 4, **caractérisé en ce qu'**à l'étape (S2) du procédé, lorsque l'indice de danger passe à un niveau de danger plus élevé, le profil de commande précédent (AP1...n) est remplacé immédiatement par le profil de commande (AP1...n) qui correspond au nouvel indice de danger et **en ce que** lorsque l'indice de danger passe à un niveau de danger plus bas, le profil de commande précédent (AP1...n) est remplacé après écoulement d'une durée prédéterminée par le profil de commande (AP1...n) qui correspond au nouvel indice de danger.

6. Procédé selon la revendication 5, **caractérisé en ce que** la durée prédéterminée est calculée à l'étape (S1) du procédé.

7. Procédé selon l'une des revendications 1 à 6, **caractérisé en ce que** dans l'étape (S3) du procédé, des signaux de commande qui commandent le tendeur (2) de ceinture à moteur électrique en modifiant le courant (1) de son moteur sont formés en fonction du profil de commande (AP1...n) concerné.

8. Dispositif (10) de commande d'au moins un moyen de retenue réversible, en particulier d'un tendeur (2) de ceinture à moteur électrique, d'un véhicule automobile, qui présente un dispositif de commande (1), le dispositif (10) présentant les éléments suivants :
- un dispositif de calcul (11) qui calcule un indice de danger à l'aide de valeurs de données d'un ensemble de détecteurs (3...9) de la situation de conduite, de l'environnement et des passagers du véhicule automobile,
- un dispositif d'évaluation (12) qui forme un profil de commande (AP1...n) pour le tendeur (2) de ceinture à l'aide de l'indice de danger,
- un dispositif de transfert (13) qui transfère le profil de commande (AP1...n) au dispositif de commande (1) qui commande le tendeur (2) de ceinture en fonction du profil de commande (AP1...n) et
un dispositif de mémoire (14) qui conserve des valeurs de données prédéterminées,
**caractérisé en ce que**
le dispositif (10) présente un dispositif d'affichage (15) qui affiche au conducteur une indication qui est fonction de l'indice de danger,
**en ce que** l'évolution des profils de commande qui correspondent à une situation de conduite critique est conservée en mémoire et est lue ultérieurement par l'intermédiaire de l'affichage et/ou d'une autre interface du dispositif de commande (1) et
**en ce que** lorsque l'indice de danger calculé est à un niveau de danger plus bas qu'un indice de danger précédent à un plus haut niveau de danger, des valeurs de données supplémentaires d'une détection de collision sont utilisées en même temps qu'un retard temporel prédéterminé et **en ce qu'**un affichage à destination du conducteur est réalisé en fonction de l'indice de danger.

9. Dispositif selon la revendication 8, **caractérisé en ce que** le dispositif de transfert (13) présente un dispositif qui forme des signaux de commande qui commandent le tendeur (2) de ceinture à moteur électrique en modifiant le courant (I) de son moteur en fonction du profil de commande (AP1...n) particulier.

10. Dispositif (10) selon l'une des revendications 8 à 9, **caractérisé en ce que** le dispositif (10) fait partie du dispositif de commande (1).
